Europäisches Patentamt

**European Patent Office**

Office européen des brevets

(11) Numéro de publication: **0 055 683**

**A1**

(12) **DEMANDE DE BREVET EUROPEEN**

(21) Numéro de dépôt: **81440027.1**

(22) Date de dépôt: **21.10.81**

(51) Int. Cl.³: **A 47 J 39/02**
**A 23 L 3/00**

(30) Priorité: **19.12.80 FR 8027403**

(43) Date de publication de la demande:
**07.07.82 Bulletin 82/27**

(84) Etats contractants désignés:
**AT BE CH DE GB IT LI LU NL SE**

(71) Demandeur: **R. FRITSCH S.A. Société Anonyme dite**
**5, rue Hugwald**
**F-68100 Mulhouse(FR)**

(72) Inventeur: **Fritsch, Edgar**
**14, rue des Anémones Richwiller**
**F-68120 Pfastatt(FR)**

(72) Inventeur: **Fritsch, Norbert**
**10, rue de la Rivière**
**F-68390 Sausheim(FR)**

(74) Mandataire: **Aubertin, François**
**Cabinet BUGNION PROPRIETE INDUSTRIELLE 4, rue de**
**Haguenau**
**F-67000 Strasbourg(FR)**

(54) Procédé d'acheminement des aliments pour cuisines collectives en liaison froide et appareil pour l'application de ce procédé.

㊗ Selon le procédé on intercale, aussi bien pour les aliments cuisinés que pour les aliments froids, entre le refroidissement à trois degrés Celsius et le stockage dans la chambre froide, une phase de mise sous vide des aliments disposés soit dans un chariot à portions collectives ou individuelles (1), soit dans un bac de dimensions gastro-normes à couvercle étanche à l'aide d'une unité centrale de mise sous vide du chariot et/ou du bac.

FIG. 1

Procédé d'acheminement des aliments pour cuisines collectives en liaison froide et appareils pour l'application de ce procédé.

L'invention concerne, d'une part, un procédé d'acheminement des aliments pour les cuisines collectives en liaison froide et, d'autre part, aux appareils pour l'application de ce procédé.

On connaît déjà plusieurs procédés d'acheminement des aliments pour les cuisines collectives en liaison chaude. Selon ce procédé, les aliments cuisinés sont directement acheminés depuis la cuisine collective jusqu'à son lieu de distribution. Du fait que les aliments au lieu de distribution doivent encore avoir une température de soixante cinq degrés Celsius, ce procédé ne peut pas être utilisé lorsque, d'une part, la quantité d'aliments à acheminer est importante et, d'autre part, le lieu de distribution est éloigné de la cuisine collective.

On connaît également un procédé d'acheminement des aliments pour les cuisines collectives en liaison froide. Selon ce procédé, les aliments sont cuisinés dans une cuisine centrale puis sont refroidis de soixante cinq degrés Celsius à trois degrés Celsius à coeur en moins d'une heure. Ce refroidissement est réalisé par l'intermédiaire d'une cellule de réfrigération rapide, soit mécanique, soit cryogénique. Les aliments sont stockés au froid pendant un temps maximum de trois jours puis sont transportés aux divers points de consommation. A ces points de consommation, les aliments sont régénérés et portés à une température de soixante cinq degrés Celsius une heure avant la consommation. En général, on utilise, à cet effet, des barquettes à jeter.

Toutefois, ce dernier procédé présente plusieurs inconvénients. En effet, selon la législation actuellement en cours, la conservation des aliments est limitée à trois jours. Parfois, il arrive qu'il est nécessaire de faire des réparations importantes dans une cuisine collective dont la durée peut être supérieure à trois jours. Il est certain qu'un stockage tellement limité peut présenter de graves inconvénients.

De même, l'utilisation de barquettes à jeter pose de nombreux problèmes. Du fait qu'elles sont utilisées en très grande quantité, parfois plusieurs milliers par jour, le coût total des barquettes est très élevé. De plus, il est nécessaire de stocker ces barquettes et donc prévoir une aire de stockage importante. Fréquemment, la place est très limitée. Après utilisation, il est nécessaire de prévoir des moyens pour la destruction des barquettes, ce qui entraîne des frais supplémentaires. Finalement, on a constaté que l'utilisation constante de barquettes présente des inconvénients psychologiques parmi les consommateurs, notamment dans le cadre des malades.

Un autre inconvénient de ce procédé réside dans l'utilisation des aliments froids tels que les hors-d'oeuvre, les salades et certains desserts. Selon ce procédé, ces aliments froids doivent être préparés séparément et ne peuvent être ajoutés aux autres aliments qu'après régénération.

On sait que, pour une conservation correcte des aliments pendant un certain temps, il est nécessaire de prendre en considération trois critères :

. il faut maintenir les aliments au froid ;

. il faut assurer une absence d'air pour éviter leur oxydation ;

. il faut les protéger contre la lumière risquant de détériorer les aspects, notamment par les rayons ultra-violets.

La présente invention a pour but de remédier à ces inconvénients. L'invention, telle qu'elle est caractérisée dans les revendications, résout le problème consistant en un procédé concernant les cuisines collectives en liaison froide permettant d'augmenter considérablement la durée de conservation pour la porter à vingt et un jours et de préparer simultanément les aliments cuisinés et les aliments froids.

Les avantages obtenus grâce à cette invention consistent également en ceci que :

. les aliments sont mieux et plus longtemps conservés,

. il y a une meilleure organisation des menus,

. il n'y a pas d'oxydation des aliments par l'air,

. les aliments sont à l'abri de la lumière, donc des rayons ultra-violets, ce qui permet de maintenir la couleur des aliments.

L'invention est exposée ci-après plus en détail à l'aide de dessins représentant seulement un mode d'exécution.

La figure 1 représente en vue en perspective un chariot de vacuoconservation pour l'application du procédé selon l'invention.

La figure 2 représente en vue en perspective une unité centrale de vide pour la mise sous vide d'un chariot de vacuoconservation et/ou d'un bac de dimensions gastronormes et/ou euronormes.

Selon l'invention, les aliments sont préparés dans une cuisine centrale. Les aliments chauds sont cuisinés à soixante cinq degrés Celsius alors que l'on assaisonne et/ou l'on prépare les aliments froids tels que les hors-d'oeuvre, les salades et certains desserts. Conformément à la législation, les aliments chauds sont refroidis à trois degrés Celsius à coeur en moins d'une heure par l'intermédiaire d'une cellule de réfrigération rapide, soit mécanique, soit cryogénique. Lorsque les aliments ont atteint cette température, ils sont retirés de la cellule de réfrigération et on procède à leur répartition par l'intermédiaire d'une chaîne de conditionnement. Les aliments refroidis et les aliments froids sont disposés dans un chariot de vacuoconservation soit en portions collectives mises dans des bacs, soit en portions individuelles mises sur des plateaux individuels. Le chariot de vacuoconservation présente un rayonnage dans lequel on glisse les bacs et/ou les plateaux individuels.

Puis, on procède à la mise sous vide du chariot de vacuoconservation par l'intermédiaire d'une unité centrale de mise sous vide. Selon un autre mode de réalisation, la mise sous vide est effectuée dans des bacs de dimensions gastronormes et/ou euronormes. De ce fait, on peut mettre en stock dans une chambre froide des repas individuels. En effet, il arrive, notamment dans des hôpitaux, que l'un ou l'autre malade reçoit un repas en dehors des heures normales de distribution et la possibilité de distribuer un repas individuel présente un autre avantage du procédé conforme à l'invention.

Après la mise sous vide soit du chariot de vacuoconservation, soit des bacs individuels, on stocke les chariots et les bacs dans une chambre froide ayant une température de trois degrés Celsius, donc une température identique à celle des aliments refroidis. Ainsi, il est possible de stocker dans la chambre froide des aliments pendant une durée pouvant atteindre au maximum vingt et un jours.

Pour l'utilisation, les chariots et/ou les bacs individuels sont prélevés de la chambre froide puis mis à la pression atmosphérique, ce qui permet, dans le cas des chariots, l'ouverture de la porte et, dans le cas des bacs, d'enlever le couvercle étanche. Les aliments retirés sont transportés aux divers points de consommation puis les aliments chauds sont régénérés à une température de soixante cinq degrés Celsius, une heure avant la consommation.

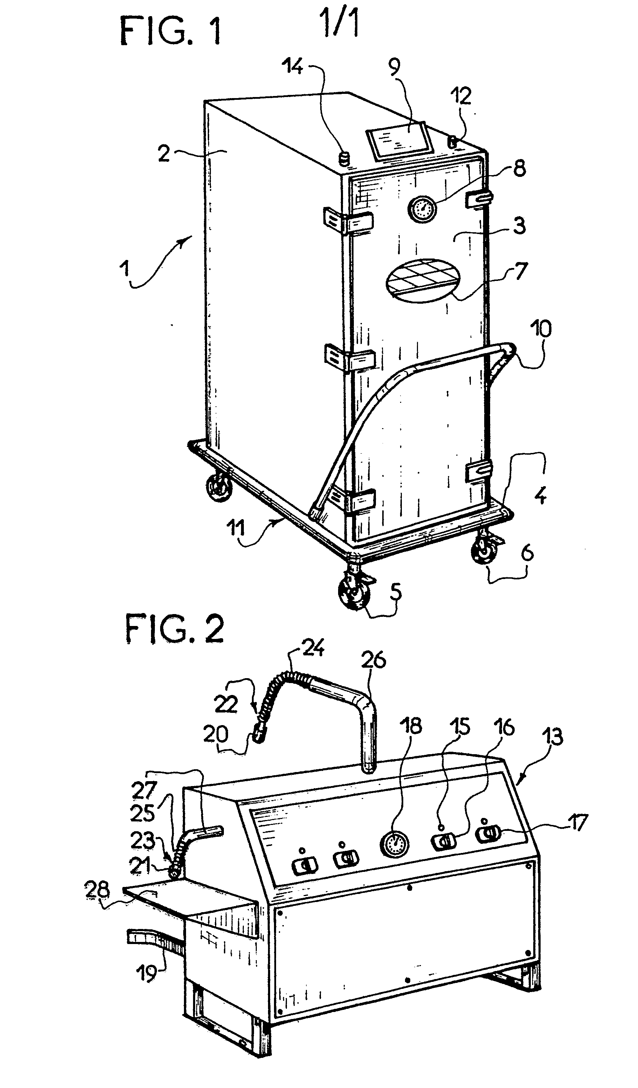

On se réfère à la figure 1 représentant un chariot de vacuoconservation 1. Ce chariot 1 comporte un container 2 pourvu d'une porte 3 et placé sur un chariot 4 muni de roulettes 5, 6. Selon un premier mode de réalisation, le container 2 est amovible alors que selon un autre mode de réalisation, le container 2 et le chariot 4 forment un seul ensemble. Pour permettre de contrôler le contenu, la porte 3 est transparente. Selon un autre mode de réalisation, la porte 3 est opaque mais comporte un hublot 7 permettant ledit contrôle. Sur chaque chariot 1 est monté un vacuomètre 8 indiquant le vide du chariot 1, ce qui permet un contrôle journalier en vue de garantir la parfaite conservation. On pourvoit le chariot 1 d'un porte document 9 dans lequel on peut glisser une ou plusieurs cartes sur lesquelles on peut répertorier le contenu du chariot 1 et différentes données techniques tels que la date de mise sous vide, le vide initialement réalisé et autres.

Pour faciliter le rangement et le dégagement des différents chariots 1, on prévoit des poignées de manutention amovibles 10 et une ceinture pare-chocs 11. Pour la mise sous vide du chariot 1, on dispose sur chaque chariot un coupleur 12 de mise sous vide permettant de relier le chariot 1 à une unité centrale de mise sous vide 13 (voir figure 2). De même, on prévoit une valve d'admission d'air 14 permettant de mettre l'intérieur du chariot 1 à la pression atmosphérique. Bien entendu, le chariot 1 doit présenter une rigidité pour résister aux pressions de l'ordre de 1 bar/cm².

On se réfère à la figure 2.

L'unité centrale de mise sous vide 13, pourvue des moyens de contrôle habituels et connus en soi, tels que voyant de contrôle 15, mise en route des pompes 16, mise sous vide manuelle 17, vacuomètre 18, présente deux particularités : d'une part, elle comporte une fourche de guidage 19 facilitant le positionnement des chariots 1 et, d'autre part, deux coupleurs rapides 20, 21 disposés à l'extrémité 22, 23 de deux tuyaux flexibles 24, 25 branchés sur des tuyaux fixes 26, 27 solidaires de l'unité 13. L'un de ces coupleurs rapides 20 coopère avec le coupleur 12 du chariot 1 alors que le second coupleur rapide 21 permet la mise sous vide des bacs individuels posés sur une tablette 28 solidaire de l'unité 13.

Revendications

1. Procédé d'acheminement des aliments pour les cuisines collectives en liaison froide constitué d'une cuisson des aliments dans une cuisine centrale à soixante cinq degrés Celsius, d'un refroidissement à trois degrés Celsius à coeur en moins d'une heure, d'un stockage dans une chambre froide à une température de trois degrés Celsius, d'un transport aux divers points de consommation et d'une régénération à température de soixante cinq degrés, caractérisé en ce que l'on intercale, aussi bien pour les aliments cuisinés que pour les aliments froids, entre le refroidissement à trois degrés Celsius et le stockage dans la chambre froide, une phase de mise sous vide des aliments disposés soit dans un chariot à portions collectives ou individuelles, soit dans un bac de dimensions gastronormes à couvercle étanche.

2. Appareils pour l'application du procédé selon la revendication 1, caractérisés en ce qu'ils comportent au moins un chariot de vacuoconservation (1) pourvu de portions collectives et/ou individuelles et au moins une unité centrale (13) de mise sous vide du chariot (1) et/ou du bac de dimensions gastronormes.

3. Appareils selon la revendication 2, caractérisés en ce que le chariot de vacuoconservation (1) comporte un container rigide (2) résistant à une pression de l'ordre de 1 bar/cm² muni d'une poignée amovible (10), d'une ceinture pare-chocs (11), d'une porte transparente (3) pourvue d'un vacuomètre (8), d'un porte document (9), d'un coupleur de mise sous vide (12) et d'une valve d'admission d'air (14).

4. Appareils selon la revendication 2, caractérisés en ce que l'unité centrale de mise sous vide (13) comporte une fourche de guidage (19), facilitant le positionnement des chariots (1), et deux coupleurs rapides (20,21) reliés à l'unité (13) par des tuyaux flexibles (24,25) branchés sur des tuyaux fixes (26,27), l'un des coupleurs rapides (20) coopérant avec le coupleur (12) du chariot (1) et l'autre coupleur rapide (21) permettant la mise sous vide des bacs individuels posés sur une tablette (28) solidaire de l'unité (13).

FIG. 1

1/1

0055683

FIG. 2

**0055683**

Numéro de la demande

Office européen
des brevets

**RAPPORT DE RECHERCHE EUROPEENNE**

EP 81 44 0027

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| A | DE - A - 2 329 858 (PACHMANN) <br> * En entier * | 1-4 | A 47 J 39/02 <br> A 23 L 3/00 |
| A | FR - A - 1 435 920 (RAIMOND) <br> * En entier * | 1-4 | |
| A | DE - A - 2 062 340 (BYSTRICAN) <br> * En entier * | 1,2 | **DOMAINES TECHNIQUES RECHERCHES (Int. Cl. 3)** |
| A | FR - A - 911 025 (MAXSON) <br> * En entier * | 1,2 | A 47 J <br> A 23 L |
| A | US - A - 3 992 069 (KITTERMAN) <br> * Figures 1,2 * | 3 | |
| A | FR - A - 2 037 447 (LAURENT) <br> * Figures 1,2 * | 4 | |
| A | FR - A - 2 346 989 (ALLEGRUCCI & CIE) <br> * En entier * | 1 | **CATEGORIE DES DOCUMENTS CITES** <br><br> X: particulièrement pertinent à lui seul <br> Y: particulièrement pertinent en combinaison avec un autre document de la même catégorie <br> A: arrière-plan technologique· <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons |
| A | FR - A - 1 560 627 (TRICAULT) <br> * En entier * <br> ---- | 1 | &: membre de la même famille, document correspondant |

| | Le présent rapport de recherche a été établi pour toutes les revendications | | |
|---|---|---|---|
| Lieu de la recherche | Date d'achèvement de la recherche | | Examinateur |
| La Haye | 22-03-1982 | | SCHARTZ |

OEB Form 1503.1   06.78